# EUROPÄISCHE PATENTSCHRIFT

(11) **EP 3 872 258 B1**
(45) Veröffentlichungstag und Bekanntmachung des Hinweises auf die Patenterteilung: **17.07.2024**
(21) Anmeldenummer: 20159469.4
(22) Anmeldetag: 26.02.2020
(51) Int. Cl.: E01C 19/48

(54) **KONTAKTLOSE MATERIALÜBERGABE ZWISCHEM EINEM LKW UND EINEM FAHRENDEN STRASSENBAUFAHRZEUG**
CONTACTLESS MATERIAL TRANSFER BETWEEN A TRUCK AND A MOVING ROAD CONSTRUCTION VEHICLE
TRANSFERT DE MATIÈRE SANS CONTACT ENTRE UN POIDS LOURD ET UN VÉHICULE MOBILE POUR TRAVAUX ROUTIERS

(43) Veröffentlichungstag der Anmeldung: 01.09.2021
(73) Patentinhaber: Joseph Vögele AG, 67067 Ludwigshafen (DE)
(72) Erfinder: HOLFELDER, Jens, 67117 Limburghof (DE)
(74) Vertreter: Grünecker Patent- und Rechtsanwälte PartG mbB

(56) Entgegenhaltungen:
- EP-A1- 0 667 415
- DE-U1- 202012 003 689
- US-A1- 2019 248 265
- US-A1- 2019 377 363

## Beschreibung

Die Erfindung betrifft die Materialübergabe zwischen einem LKW und einem hinter dem LKW fahrenden Straßenfertiger oder einem hinter dem LKW fahrenden Beschicker für einen Stra-βenfertiger.

Um gleichmäßige und gute Einbauergebnisse zu erreichen, sollte ein Straßenfertiger während des Einbaus einer Fahrbahndecke nicht gestoppt werden. Die Fahrbahndecke soll möglichst in einem Zug eingebaut werden. Da der Gutbunker des Straßenfertigers jedoch lediglich eine begrenzte Kapazität zur Aufnahme von Einbaugut aufweist, ist es in der Regel erforderlich, den Straßenfertiger während des laufenden Einbauvorgangs mit zusätzlichem Einbaumaterial zu versorgen. Es ist gängige Praxis, das Einbaumaterial mittels LKWs von einem Mischwerk anzuliefern und während des laufenden Einbauvorgangs von dem LKW in den Gutbunker des Straßenfertigers zu kippen. Derzeit eingesetzte Straßenfertiger umfassen in ihrem bezüglich der Einbaufahrtrichtung vorderen Bereich Abdruckrollen, welche mit den Hinterreifen des LKWs in Eingriff kommen. Der LKW fährt rückwärts an den Straßenfertiger heran und lässt sich dann von dem Straßenfertiger über den Kontakt der Abdruckrollen mit den Hinterreifen des LKWs vor dem Straßenfertiger herschieben. Während der LKW vor dem Straßenfertiger hergeschoben wird, kippt der LKW durch Anheben seiner Lademulde Einbaumaterial in den in Fahrtrichtung vorne an dem Straßenfertiger vorgesehenen Gutbunker. Beim Andocken zwischen LKW und Straßenfertiger und beim Abkippen des Materials in den Gutbunker ist eine gute Kommunikation zwischen dem Fertigerfahrer und dem LKW-Fahrer essentiell. Der LKW muss zum richtigen Zeitpunkt das Rücksetzen beenden und die Bremsen lösen oder mit einer angepassten Bremskraft bremsen, damit der LKW von dem Straßenfertiger geschoben werden kann. Das Andocken sollte möglichst ruckfrei erfolgen, um das Einbauergebnis nicht zu beeinträchtigen. Es entsteht ein zusätzlicher Leistungsbedarf des Straßenfertigers, um den LKW vor sich herzuschieben. Für das Einstellen eines geeigneten Anstellwinkels der Lademulde des LKWs ist der LKW-Fahrer auf Anweisungen des Fertigerfahrers oder eines Einweisers angewiesen, da der LKW-Fahrer die Situation am Gutbunker nicht oder nur schlecht einsehen kann.

Aus der EP 0 667 415 A1 ist ein Straßenfertiger mit einer Einrichtung zum Überwachen und Anzeigen von für eine Beschickung mit Einbaumaterial relevanten Betriebsparametern des Straßenfertigers bekannt. Die Einrichtung enthält einen Abstandssensor, der in Fahrtrichtung nach vorn gerichtet und in der Lage ist, den Abstand zum hinteren Ende des LKWs festzustellen. Die Einrichtung enthält weiterhin einen Sensor, mit dem der Befüllungsgrad bzw. der Füllstand im Gutbunker festzustellen ist. Im Bedienungsbereich des Fahrerhauses des Straßenfertigers ist gut sichtbar für den Fahrer des LKWs eine elektronische Anzeigetafel angeordnet. Mit der Anzeigetafel ist eine Datenverarbeitung verbunden, die die Signale von den Sensoren erhält und sie in Befehle umwandelt, die in Form von Piktogrammen oder Analoganzeigen auf der Anzeigetafel erscheinen. Anhand der Informationen auf der Anzeigetafel soll der Andockvorgang des LKWs an die Abdruckrollen des Straßenfertigers und die Materialübergabe zwischen dem LKW und dem Straßenfertiger erleichtert werden.

Aus der DE 20 2012 003 689 U1 ist ein Straßenfertiger mit einer Signalisierungseinrichtung zum Signalisieren von Parametern der Materialbefüllung zu einem Lastkraftwagen bekannt. Ein Außenspiegel des Straßenfertigers und die Signalisierungseinrichtung sind mittels eines gemeinsamen Halters an dem Straßenfertiger befestigt.

Aus der DE 10 2015 009 699 A1 ist ein Straßenfertiger bekannt, welcher bevorzugterweise mindestens zwei Sensoren umfasst, sodass ein anfahrender LKW aus verschiedenen Richtungen erfasst werden kann und somit ein dreidimensionales Bild des Andockvorgangs des LKWs erzeugt werden kann. Durch die erhöhte Anzahl von Sensoren soll sich der Andockvorgang des LKWs an den Vorratsbehälter des Straßenfertigers sehr genau steuern lassen. Während des Füllvorgangs des Vorratsbehälters mit Straßenbaumaterial soll der LKW durch mindestens zwei Sensoren erfasst werden, um festzustellen, wenn der LKW von seiner Füllposition wegdriftet. Es sollen zudem auf Basis ermittelter Positionsdaten des LKWs Lenkanweisungen für den LKW erzeugt werden.

Die US 2019/0248265 A1 beschreibt ein Fernbedienungssystem für eine Lademulde eines LKWs, welcher sich zum Befüllen des Gutbunkers eines Straßenfertigers im Kontakt mit vorderen Rollen des Straßenfertigers zusammen mit dem Straßenfertiger bewegt. Das Fernbedienungssystem erlaub es einem Fahrer des Straßenfertigers oder einer anderen Person die Lademulde des LKWs anzuheben oder abzusenken. Der Fahrer des Straßenfertigers hat dabei direkte Sicht auf den Gutbunker und die Lademulde des LKWs.

Es ist zudem aus der Praxis bekannt, einen Straßenfertiger nicht direkt durch das Abkippen von Einbaumaterial aus einem LKW in den Gutbunker des Straßenfertigers zu befüllen, sondern das Einbaumaterial von dem LKW auf einen vor dem Straßenfertiger herfahrenden Beschicker zu übergeben. Der Beschicker umfasst einen Gutbunker, in welchen der LKW das Einbaumaterial abkippt. In Fahrtrichtung hinten umfasst der Beschicker eine Fördereinrichtung, mittels welcher das Einbaumaterial dann in den hinter dem Beschicker herfahrenden Straßenfertiger gefördert wird. Beschicker sind Beispielsweise aus der DE 297 15 467 U1 oder der EP 0 834 620 A1 bekannt.

Die US 2019 / 0 377 363 A1 offenbart ein Beschickerfahrzeug, an welchem ein Sensor angebracht ist, der kontaktlos einen Abstand von dem Sensor zu dem Straßenfertiger ermitteln kann. Eine Geschwindigkeit und ein Bremsverhalten des Beschickerfahrzeugs werden gesteuert, um einen vordefinierten Abstand in Bezug auf den Straßenfertiger beizubehalten.

Es ist Aufgabe der Erfindung, eine Materialübergabe zwischen einem LKW und einem fahrenden Straßenbaufahrzeug im Hinblick auf einfache Durchführung und eine möglichst geringe Beeinträchtigung des Einbauergebnisses zu verbessern.

Diese Aufgabe wird durch das Verfahren gemäß Anspruch 1 gelöst. Die abhängigen Ansprüche geben vorteilhafte Ausführungsformen der Erfindung an.

Die Erfindung stellt ein Verfahren zur Materialübergabe zwischen einem LKW und einem fahrenden Straßenbaufahrzeug bereit. Bei dem Straßenbaufahrzeug handelt es sich um einen Straßenfertiger oder um einen Beschicker für einen Straßenfertiger. Mittels eines Systems zur Abstandsregelung wird ein Abstand zwischen dem fahrenden Straßenbaufahrzeug und einem ohne Kontakt mit dem Straßenbaufahrzeug vor dem Straßenbaufahrzeug herfahrenden LKW konstant gehalten. Während der Abstand zwischen dem fahrenden Straßenbaufahrzeug und dem LKW konstant gehalten wird, wird Material von einer Lademulde des LKWs in einen Gutbunker des Straßenbaufahrzeugs gekippt.

Das System zur Abstandsregelung kann sicherstellen, dass der Abstand zwischen dem fahrenden Straßenbaufahrzeug und dem LKW während der Materialübergabe ein Kippen von Material von der Lademulde des LKWs in den Gutbunker des Straßenbaufahrzeugs erlaubt und zudem ein Kontakt zwischen dem LKW und dem Straßenbaufahrzeug vermieden wird. Ein Andocken zwischen dem LKW und dem Straßenbaufahrzeug durch physischen Kontakt des LKWs mit dem Straßenbaufahrzeug ist nicht erforderlich. Erschütterungen, die bei einem Andocken mit physischem Kontakt zwischen dem LKW und dem Straßenbaufahrzeug auftreten würden, werden vermieden. Somit werden negative Einflüsse der Materialübergabe auf das Einbauergebnis vermieden. Dass kein Kontakt zwischen dem LKW und dem Straßenbaufahrzeug besteht, kann insbesondere heißen, dass kein Kontakt derart besteht, dass der LKW teilweise oder vollständig durch das Straßenbaufahrzeug geschoben wird. Eine Berührung zwischen Komponenten des LKWs und dem Straßenbaufahrzeug kann dennoch vorhanden sein. Beispielsweise kann eine Kippklappe der Lademulde des LKWs oder ein anderer Teil der Lademulde des LKWs beim Kippen des Materials den Gutbunker des Straßenbaufahrzeugs berühren.

Da der LKW während der Materialübergabe nicht von dem Straßenbaufahrzeug geschoben wird, reduziert sich die erforderliche Antriebsleistung des Straßenbaufahrzeugs. Es ist zudem nicht erforderlich, die Antriebsleistung des Straßenbaufahrzeugs für die Materialübergabe anzupassen, wie dies bei einem physischen Andocken des LKWs an das Straßenbaufahrzeug erforderlich wäre. Gegenüber einer Materialübergabe mit physischem Kontakt zwischen dem LKW und dem Straßenbaufahrzeug sind die Anforderungen an die Fertigkeiten und Erfahrung des LKW-Fahrers und des Fahrers des Straßenbaufahrzeugs geringer.

Wie erwähnt, handelt es sich bei dem Straßenbaufahrzeug um einen Straßenfertiger oder um einen Beschicker für einen Straßenfertiger. Besonders vorteilhaft wird die Erfindung mit einem Straßenfertiger eingesetzt, da hier das Vermeiden eines physischen Andockens des LKWs an den Straßenfertiger sich direkt positiv auf das Einbauergebnis auswirkt. Insbesondere werden Abdrücke und Unregelmäßigkeiten im eingebauten Belag vermieden, welche bei einem physischen Andocken des LKWs an den Straßenfertiger entstehen können und eine nachträgliche Nachbesserung erforderlich machen können. Auch wenn die Erfindung für die Materialübergabe zwischen einem LKW und einem Beschicker eingesetzt wird, ergeben sich Vorteile bezüglich der erleichterten Durchführbarkeit des Verfahrens für die Fahrer und der verringerten Antriebsleistung des Beschickers.

Um zur Materialübergabe durch einen vorausfahrenden LKW gut zugänglich zu sein, kann der Gutbunker bezüglich einer Einbaufahrtrichtung vorne an dem Straßenbaufahrzeug vorgesehen sein.

Vorzugsweise wird der LKW während der Materialübergabe durch seinen eigenen Fahrantrieb angetrieben. Wenn der LKW während der Materialübergabe durch seinen eigenen Fahrantrieb fährt, ist es nicht erforderlich, anderweitig (beispielsweise an dem Straßenbaufahrzeug) Kapazitäten zum Bewegen des LKWs während der Materialübergabe vorzusehen.

Das System zur Abstandsregelung kann eine Sensoreinrichtung umfassen, welche den Abstand zwischen dem fahrenden Straßenbaufahrzeug und dem vor dem Straßenbaufahrzeug herfahrenden LKW bestimmt. Eine Ausgabe der Sensoreinrichtung kann als Messgröße für die Abstandsregelung verwendet werden.

Die Sensoreinrichtung kann einen Abstandssensor umfassen, welcher an dem Straßenbaufahrzeug vorgesehen ist. Wenn der Abstandssensor an dem Straßenbaufahrzeug vorgesehen ist, kann es ausreichen, einen (oder mehrere) Abstandssensoren an dem Straßenbaufahrzeug vorzusehen, auch wenn das Straßenbaufahrzeug von einer Vielzahl von unterschiedlichen LKWs mit Material versorgt werden soll.

Die Sensoreinrichtung kann einen Abstandssensor umfassen, welcher an dem LKW vorgesehen ist. Der Abstandssensor kann an dem LKW optional noch für weitere Funktionen eingesetzt werden. Beispielsweise kann der Abstandssensor Teil eines Fahrassistenzsystems des LKWs sein. Wenn der Abstandssensor an dem LKW vorgesehen ist, kann sich die Menge der vom Straßenbaufahrzeug zu dem LKW für die Abstandsregelung zu übertragenden Daten verringern.

Das System zur Abstandsregelung kann Steueranweisungen für eine Geschwindigkeit des LKWs erzeugen. Die Steueranweisungen für die Geschwindigkeit des LKWs können beispielsweise derart erzeugt werden, dass ein Abstand zwischen dem fahrenden Straßenbaufahrzeug und dem LKW auf einen vorbestimmten Wert oder in einen vorbestimmten Bereich geregelt wird. Die Abstandsregelung kann eine gewisse Abweichung des Abstands zwischen dem fahrenden Straßenbaufahrzeug und dem LKW von einem Sollwert der Abweichung zulassen. Die zulässige Abweichung kann so bestimmt werden, dass innerhalb der durch die Abweichung bestimmten Grenzen immer noch ein sicheres Befüllen des Gutbunkers des Straßenbaufahrzeugs durch Abkippen von Material aus der Lademulde des LKWs möglich ist.

Das System zur Abstandsregelung kann eine Steuereinheit umfassen, welche einen Fahrantrieb und/oder eine Bremse des LKWs automatisch steuert, um den Abstand zwischen dem fahrenden Straßenbaufahrzeug und dem LKW konstant zu halten. Die Steuereinheit kann den Fahrantrieb und/oder die Bremse des LKWs insbesondere basierend auf der Ausgabe eines Abstandssensors steuern, welcher den Abstand zwischen dem fahrenden Straßenbaufahrzeug und dem vor dem Straßenbaufahrzeug herfahrenden LKW misst. Ein automatisches Steuern des Fahrantriebs und/oder der Bremse des LKWs während der Materialübergabe stellt sicher, dass der Abstand zwischen dem Straßenbaufahrzeug und dem LKW zuverlässig konstant gehalten wird und die Materialübergabe zuverlässig und sicher durchgeführt werden kann. Das automatische Steuern des Fahrantriebs und/oder der Bremse des LKWs erlaubt es dem LKW-Fahrer sich auf andere Aufgaben zu konzentrieren, wie beispielsweise das Lenken des LKWs.

Das System zur Abstandsregelung kann Komponenten aufweisen, die auf dem Straßenbaufahrzeug vorgesehen sind, und Komponenten aufweisen, die auf dem LKW vorgesehen sind. Es wäre auch denkbar, dass das System zur Abstandsregelung komplett auf dem LKW vorgesehen ist. Die Steuereinheit des Systems zur Abstandsregelung kann auf dem Straßenfertiger oder auf dem LKW vorgesehen sein. Es wäre auch denkbar, dass die Steuereinheit mehrere Komponenten umfasst, von denen eine oder mehrere auf dem Straßenfertiger vorgesehen sind und eine oder mehrere auf dem LKW vorgesehen sind.

Informationen für die Abstandsregelung können von dem Straßenbaufahrzeug drahtlos an den LKW übertragen werden. Eine drahtlose Übertragung lässt sich mit einem geeigneten Übertragungsprotokoll schnell und ohne großen Einrichtungsaufwand auf der Baustelle etablieren. Die drahtlose Übertragung von Informationen kann beispielsweise über Mobilfunk, über WLAN, über Funk, über ZigBee, über Bluetooth oder über andere geeignete Übertragungsarten erfolgen. Die drahtlose Übertragung kann direkt zwischen dem Straßenbaufahrzeug und dem LKW oder indirekt über den Umweg eines Servers oder einen anderen Umweg erfolgen. Beim Etablieren einer drahtlosen Übertragung zwischen dem Straßenbaufahrzeug und dem LKW können Identifikationsinformationen ausgetauscht werden.

Vor Beginn der Materialübergabe kann sich der LKW an dem Straßenbaufahrzeug anmelden. Dies kann beispielsweise über eine drahtlose Kommunikation zwischen dem Straßenbaufahrzeug und dem LKW erfolgen. Basierend auf einer Identifikation des LKWs können Parameter der Abstandsregelung, insbesondere ein Sollwert des zu regelnden Abstands, aus einer Datenbank gewählt werden.

Das Lenken des LKWs kann von einem Fahrer des LKWs übernommen werden. Da kein physischer Kontakt zwischen dem LKW und dem Straßenbaufahrzeug besteht, wirken sich kleinere Unregelmäßigkeiten in der Lenkung des LKWs nicht auf das Einbauergebnis aus. Es wäre alternativ auch denkbar, die Lenkung des LKWs zu automatisieren.

Gemäß einer Ausführungsform regelt das System zur Abstandsregelung den Abstand zwischen dem fahrenden Straßenbaufahrzeug und dem vor dem Straßenbaufahrzeug herfahrenden LKW auf einen Wert (oder in einen Bereich), welcher basierend auf einer Art des LKWs und/oder des Straßenbaufahrzeugs aus einer Nachschlagetabelle gewählt wird. Mit Hilfe der Nachschlagetabelle kann sichergestellt werden, dass der Abstand zwischen dem Straßenbaufahrzeug und dem LKW für eine reibungslose Materialübergabe zwischen dem LKW und dem Straßenbaufahrzeug geeignet ist. Die Einträge der Nachschlagetabelle können beispielsweise angesichts der speziellen Geometrien unterschiedlicher Arten von LKWs und unterschiedlicher Arten von Straßenbaufahrzeugen erstellt worden sein.

Eine Kippfunktion der Lademulde des LKWs kann ferngesteuert werden, insbesondere von dem Straßenbaufahrzeug aus. Die Betätigung der Kippfunktion kann das Kippen der Lademulde zum Abkippen des Materials in den Gutbunker des Straßenbaufahrzeugs umfassen. Ein Fernsteuern der Kippfunktion der Lademulde des LKWs von dem Straßenbaufahrzeug aus erleichtert ein Berücksichtigen des jeweiligen Beladezustands des Gutbunkers des Straßenbaufahrzeugs, da der Beladungszustand des Gutbunkers von dem Straßenbaufahrzeug aus besonders gut eingesehen oder überwacht werden kann. Es wäre auch denkbar, dass beispielsweise eine Bedienperson am Boden die Kippfunktion der Lademulde des LKWs fernsteuert.

Die Kippfunktion des Straßenbaufahrzeugs kann manuell von einem Fahrer des Straßenbaufahrzeugs oder von einer anderen Person ferngesteuert werden. Der Fahrer des Straßenbaufahrzeugs oder die andere Person kann durch Sichtkontakt den Füllstand des Gutbunkers und/oder die momentane Materialübergabe-Situation überprüfen und darauf basierend die Kippfunktion der Lademulde des LKWs fernsteuern. Es wäre auch denkbar, dass der Fahrer des Straßenbaufahrzeugs oder die andere Person die Kippfunktion der Lademulde des LKWs basierend auf einer Sensorinformation steuert, beispielsweise basierend auf einer Ausgabe eines Füllstandssensors, welcher einen Füllstand des Gutbunkers bestimmt.

An dem Straßenbaufahrzeug kann ein Füllstandssensor vorgesehen sein, welcher einen Füllstand des Gutbunkers bestimmt. Die Kippfunktion der Lademulde des Straßenbaufahrzeugs kann basierend auf einer Ausgabe des Füllstandssensors automatisch ferngesteuert werden. Beispielsweise kann die Lademulde des LKWs weiter angestellt werden, wenn ein Füllstand des Gutbunkers unter einen vorbestimmten Wert fällt. Bei Überschreiten eines vorbestimmten Werts für den Füllstand des Gutbunkers kann die Lademulde des LKWs abgesenkt werden, um ein Überfüllen des Gutbunkers zu vermeiden.

Im Folgenden wird die Erfindung anhand von Ausführungsbeispielen unter Bezugnahme auf die Figuren weiter erläutert. Dabei zeigt
- Fig. 1: eine schematische Darstellung zur Beschreibung einer Materialübergabe zwischen einem LKW und einem als Straßenfertiger ausgebildeten Straßenbaufahrzeug gemäß einer Ausführform mit einem an dem Straßenbaufahrzeug vorgesehenen Abstandssensor;
- Fig. 2: ein schematisches Blockdiagramm, welches Komponenten des LKWs und des Straßenbaufahrzeugs aus Figur 1 zeigt;
- Fig. 3: eine schematische Darstellung zur Beschreibung einer Materialübergabe zwischen einem LKW und einem als Straßenfertiger ausgebildeten Straßenbaufahrzeug gemäß einer Ausführform mit einem an dem LKW vorgesehenen Abstandssensor;
- Fig. 4: ein schematisches Blockdiagramm, welches Komponenten des LKWs und des Straßenbaufahrzeugs aus Figur 3 zeigt; und
- Fig. 5: eine schematische Darstellung eines Beschickers für einen Straßenfertiger.

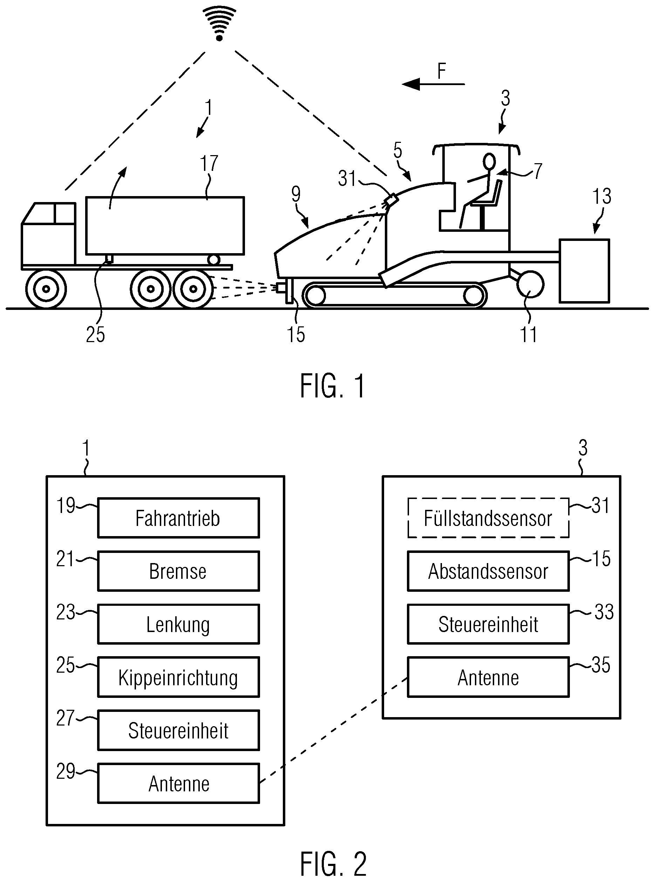

Die Erfindung betrifft die Materialübergabe zwischen einem LKW 1 und einem fahrenden Stra-βenbaufahrzeug. Figur 1 zeigt eine Ausführungsform, in welcher es sich bei dem Straßenbaufahrzeug um einen Straßenfertiger 3 handelt. Der Straßenfertiger 3 baut eine Fahrbahndecke ein, während er entlang einer Einbaufahrtrichtung F über ein Planum fährt. Der Straßenfertiger 3 umfasst ein Zugfahrzeug 5 mit einem darauf angeordneten Bedienstand 7 für einen Fertigerfahrer. Vorne an dem Straßenfertiger 3 ist ein Gutbunker 9 zur Aufnahme von Einbaugut vorgesehen. Das Einbaugut wird von dem Gutbunker 9 über eine nicht dargestellte Transporteinrichtung in einen hinteren Bereich des Straßenfertigers 3 transportiert, wo es von einer Querverteilerschnecke 11 in einer Breitenrichtung des Straßenfertigers 3 verteilt wird. Anschließend wird das Einbaugut von einer hinter dem Zugfahrzeug 5 hergezogenen Einbaubohle 13 des Straßenfertigers 3 verdichtet. Um einen hochwertigen und gleichmäßigen Fahrbahnbelag einzubauen, sollte der Straßenfertiger 3 möglichst große Strecken ohne Unterbrechung einbauen. Da der Gutbunker 9 jedoch nur eine begrenzte Aufnahmekapazität aufweist, ist es erforderlich, den Gutbunker 9 während der Einbaufahrt des Straßenfertigers 3 mit weiterem Einbaumaterial zu befüllen. Das Einbaumaterial wird von dem LKW 1 angeliefert und in den Gutbunker 9 des fahrenden Straßenfertigers 3 gekippt. Während das Einbaumaterial von dem LKW 1 in den Gutbunker 9 des Straßenfertigers 3 gekippt wird, fährt der LKW 1 vor dem Straßenfertiger 3 her.

In der gezeigten Ausführungsform ist an dem Straßenfertiger 3 ein Abstandssensor 15 vorgesehen, welcher einen Abstand zwischen dem Straßenfertiger 3 und dem vor dem Straßenfertiger 3 herfahrenden LKW 1 misst. Insbesondere kann der Abstandssensor 15 einen Abstand zwischen einer Anbringungsstelle des Abstandssensors 15 an dem Straßenfertiger 3 und einem hinteren Reifen des LKWs 1 messen. Es wäre aber auch denkbar, dass der Abstandssensor 15 den Abstand einer Anbringungsstelle des Abstandssensors 15 am Straßenfertiger 3 zu einer anderen Position an dem LKW 1 misst. Beispielsweise könnte in einem hinteren Bereich des LKWs 1 eine Reflektorfläche für von dem Abstandssensor 15 ausgesandte Messsignale vorgesehen sein. Der Abstandssensor 15 könnte beispielsweise als Ultraschallsensor oder als Radarsensor ausgebildet sein.

Basierend auf der Abstandsmessung durch den Abstandssensor 15 wird ein Abstand zwischen dem fahrenden Straßenfertiger 3 und dem vor dem Straßenfertiger 3 herfahrenden LKW 1 konstant gehalten. Der Abstand zwischen dem Straßenfertiger 3 und dem LKW 1 kann auf einen vorbestimmten Sollwert oder in einen vorbestimmten Sollbereich geregelt werden. Bevorzugterweise erfolgt die Abstandsregelung durch Anpassen der Geschwindigkeit des LKWs 1.

Der Abstand zwischen dem Straßenfertiger 3 und dem LKW 1 wird auf einen Wert oder in einen Bereich geregelt, welcher eine Materialübergabe zwischen dem LKW 1 und dem Stra-ßenfertiger 3 durch Kippen des Einbaumaterials von einer Lademulde 17 des LKWs 1 in den Gutbunker 9 des Straßenfertigers 3 erlaubt. Durch die Abstandsregelung wird sichergestellt, dass beim Kippen der Lademulde 15 das Material zumindest größtenteils auch tatsächlich in dem Gutbunker 9 des Straßenfertigers 3 landet.

Wie in Figur 2 dargestellt, umfasst der LKW 1 einen Fahrantrieb 19, eine Bremse 21, eine Lenkung 23, eine Kippeinrichtung 25, eine Steuereinheit 27 und eine Antenne 29. Der Fahrantrieb 19 kann beispielsweise ein Hauptantriebsaggregat, insbesondere einen Dieselmotor, umfassen. Die Kippeinrichtung 25 ist zum Anheben oder Absenken der Lademulde 17 ausgebildet. Durch Betätigen der Kippeinrichtung 25 zum Anheben der Lademulde 17 lässt sich die Lademulde 17 schräg stellen und Material aus der Lademulde 17 nach hinten Abkippen. Die Steuereinheit 27 des LKWs 1 kann unterschiedliche Funktionen des LKWs 1 steuern. Insbesondere kann die Steuereinheit 27 den Fahrantrieb 19, die Bremse 21 und die Kippeinrichtung 25 steuern. Die Antenne 29 ist zur drahtlosen Kommunikation mit der dem Straßenfertiger 3 ausgebildet.

Der Straßenfertiger 3 umfasst einen Füllstandssensor 31, den Abstandssensor 15, eine Steuereinheit 33 und eine Antenne 35. Der Füllstandssensor 31 ist dazu konfiguriert, einen Füllstand des Gutbunkers 9 zu bestimmen. Beispielsweise kann der Füllstandssensor 31 einen Abstand von Einbaumaterial in den Gutbunker 9 zu einer Anbringungsstelle des Füllstandssensors 31 bestimmen. Der Füllstandssensor 31 kann beispielsweise einen Radarsensor oder einen Ultraschalsensor umfassen. Die Steuereinheit 33 des Straßenfertigers 3 kann unterschiedliche Funktionen des Straßenfertigers 3 steuern. Die Antenne 35 ist zur drahtlosen Kommunikation mit dem LKW 1 konfiguriert.

Wenn der Straßenfertiger 3 durch den LKW 1 mit Einbaumaterial versorgt werden soll, bewegt ein Fahrer des LKWs 1 den LKW1 zunächst vor den Straßenfertiger 3 in den Fahrweg des Straßenfertigers 3. Über die Antenne 29 des LKWs 1 und die Antenne 35 des Straßenfertigers 3 wird eine drahtlose Kommunikation zwischen dem LKW 1 und dem Straßenfertiger 3 etabliert. Die drahtlose Verbindung kann direkt zwischen dem LKW 1 und dem Straßenfertiger 3 aufgebaut werden. Es wäre aber auch denkbar, dass die drahtlose Verbindung indirekt über einen oder mehrere Zwischenstationen, beispielsweise einen Server, aufgebaut wird. Die drahtlose Verbindung könnte beispielsweise mittels WLAN, Bluetooth, ZigBee oder das Internet aufgebaut werden. Vorzugsweise findet nach Aufbau der drahtlosen Verbindung eine Identifikation des Straßenfertigers 3 und/oder des LKWs 1 statt. Wenn sich der Straßenfertiger 3 von hinten nahe genug an den LKW 1 angenähert hat, wird die Steuerung des Fahrantriebs 19 und der Bremse 21 des LKWs 1 von der Abstandsregelung basierend auf dem von dem Abstandssensor 15 gemessenen Abstand zwischen dem Straßenfertiger 3 und dem LKW 1 übernommen. Der LKW-Fahrer kann die Steuerung des Fahrantriebs 19 und der Bremse 21 des LKWs für die Abstandsregelung freigeben. Gemäß einer Variante generiert die Steuereinheit 33 des Straßenfertigers 3 basierend auf der Ausgabe des Abstandssensors 15 Steueranweisungen für den Fahrantrieb 19 und die Bremse 21 des LKWs 1. Diese Steueranweisungen können über die drahtlose Verbindung zu dem LKW 1 übertragen werden. Es wäre auch denkbar, dass über die drahtlose Verbindung lediglich Messsignale von dem Abstandssensor 15 an den LKW 1 übertragen werden und die Steuereinheit 27 des LWKs 1 die Steueranweisungen für den Fahrantrieb 19 und die Bremse 21 des LKWs 1 generiert. Die Lenkung des LKWs 1 bleibt vorzugsweise auch während der Abstandsregelung im Aufgabenbereich des LKW-Fahrers. Während der Abstandsregelung fährt der LKW 1 ohne physischen Kontakt mit dem Straßenfertiger 3 vor dem Straßenfertiger 3 her.

Während der Abstandsregelung kippt der LKW 1 durch Anstellen der Lademulde 17 Einbaumaterial in den Gutbunker 9 des Straßenfertigers 3. Vorzugsweise wird die Kippeinrichtung 25 des LKWs 1 ferngesteuert. Insbesondere kann die Kippeinrichtung 25 von dem Straßenfertiger 3 aus ferngesteuert werden. Gemäß einer einfachen Ausführungsform wird die Kippeinrichtung 2 des LKWs 1 durch manuellen Eingaben eines Fahrers des Straßenfertigers 3 ferngesteuert. Entsprechende Befehle könnten über die drahtlose Verbindung zwischen dem LKW 1 und dem Straßenfertiger 3 übertragen werden. Alternativ kann die Steuerung der Kippeinrichtung 25 automatisch basierend auf von dem Füllstandssensor 31 des Straßenfertigers 3 erhaltenen Informationen erfolgen. Abhängig von dem momentanen Füllstand des Gutbunkers 9 könnte die Lademulde 17 des Straßenfertigers 1 bedarfsgemäß angehoben oder abgesenkt werden, um mehr Material in den Gutbunker 9 abzukippen oder den Fluss von Material in den Gutbunker 9 zu verlangsamen oder zu stoppen.

Vorzugsweise hat der Fahrer des LKWs 1 aus Sicherheitsgründen jederzeit die Möglichkeit, in die Steuerung des Fahrantriebs 19, der Bremse 21 und der Kippeinrichtung 25 einzugreifen. Nach Beendigung der Materialübergabe kann der Fahrer des LKWs 1 die Steuerung des LKWs 1 wieder komplett übernehmen und nach vorne wegfahren, um Platz für den nächsten LKW 1 zu machen.

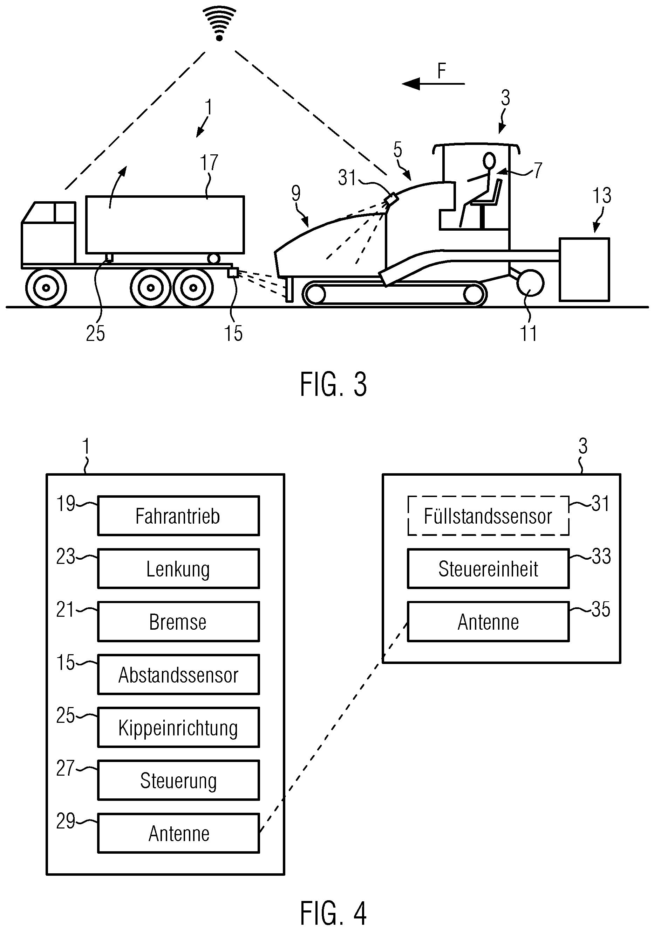

Die Figuren 3 und 4 zeigen eine alternative Ausführungsform. Die in den Figuren 3 und 4 gezeigte Ausführungsform ähnelt der in den Figuren 1 und 2 gezeigten Ausführungsform stark. Es werden lediglich Unterschiede zu der in den Figuren 1 und 2 gezeigten Ausführungsform beschrieben.

Im Prinzip unterscheidet sich die Ausführungsform der Figuren 3 und 4 von der Ausführungsform der Figuren 1 und 2 dadurch, dass der Abstandssensor 15 nicht an dem Straßenfertiger 3, sondern an dem LKW 1 angebracht ist. Wie in der Ausführungsform der Figuren 1 und 2, kann das Berechnen der Steuersignale für den Fahrantrieb 19 und die Bremse 21 des LKWs basierend auf der Ausgabe des Abstandssensors 15 durch die Steuereinheit 27 des LKWs 1 erfolgen. Wie in der Ausführungsform der Figuren 1 und 2 ist es aber auch hier möglich, dass die Steuersignale für den Fahrantrieb 19 und die Bremse 21 des LKWs von der Steuereinheit 33 des Straßenfertigers 3 erzeugt werden. Hierzu könnten von dem Abstandssensor 15 generierte Messsignale über die drahtlose Verbindung zu dem Straßenfertiger 3 übertragen werden und von der Steuereinheit 33 des Straßenfertigers 3 anschließend generierte Steueranweisungen über die drahtlose Verbindung zu dem LKW 1 zurück übertragen werden.

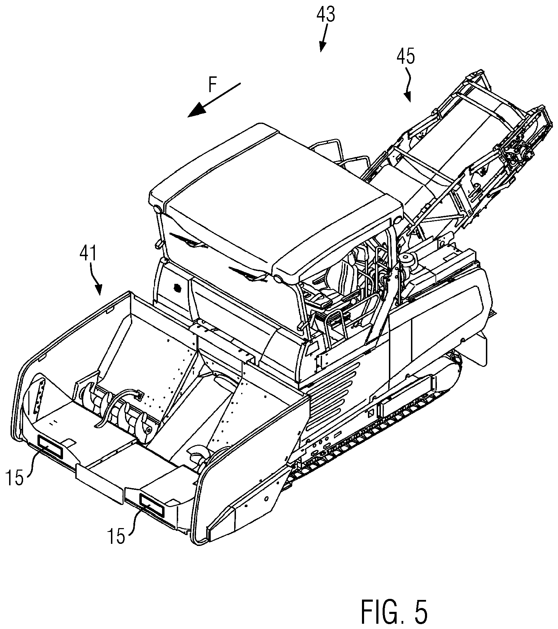

In den oben beschriebenen Ausführungsformen wird jeweils ein Gutbunker 9 eines Straßenfertigers 3 von dem LKW 1 mit Einbaugut befüllt. Alternativ wäre es aber auch denkbar, den Gutbunker 41 eines Beschickers 43 für einen Straßenfertiger mit dem LKW 1 mit Einbaugut zu versorgen. Ein Beispiel eines solchen Beschickers 43 ist in Figur 5 gezeigt. Der Beschicker 43 ist ein Fahrzeug, welches vor einem eine Fahrbahndecke einbauenden Straßenfertiger 3 herfährt, um den Gutbunker 9 des Straßenfertiger 3 mit Einbaugut zu versorgen. Der Beschicker 43 umfasst bezüglich der Einbaufahrtrichtung F vorne einen Gutbunker 41 zur Aufnahme von Einbaugut. Der Gutbunker 41 des Beschickers 43 könnte in der oben für die Befüllung eines Gutbunkers 9 eines Straßenfertigers 3 beschriebenen Art und Weise von dem LKW 1 während der Fahrt des Beschickers 43 mit Einbaugut versorgt werden. Hierzu kann an dem Beschicker 43 ein Abstandssensor 15 vorgesehen sein (in Analogie zu der Ausführungsform der Figuren 1 und 2). Alternativ könnte (in Analogie zu der Ausführungsform der Figuren 3 und 4) der Abstandssensor 15 an dem LKW 1 vorgesehen sein. Bezüglich der Einbaufahrtrichtung F im hinteren Bereich umfasst der Beschicker 43 eine Fördereinrichtung 45 zum Versorgen des Gutbunkers 9 eines hinter dem Beschicker 43 herfahrenden Straßenfertigers 3 mit Einbaugut. Das Einbaugut wird von dem Gutbunker 41 des Beschickers 43 über nicht gezeigte Transporteinrichtungen zu der Fördereinrichtung 45 gebracht.

Die bezüglich der Figuren 1 bis 4 für ein Versorgen eines Gutbunkers 9 eines Straßenfertigers 3 beschriebenen Einrichtungen und Vorgänge können analog auf eine Materialübergabe zwischen einem LKW 1 und einem Beschicker 43 durch Kippen von Einbaumaterial von der Lademulde 17 des LKWs 1 in den Gutbunker 41 des Beschickers 43 übertragen werden. Insbesondere ist die unter Bezugnahme auf die Figuren 1 bis 4 beschriebene Abstandsregelung zwischen dem LKW 1 und dem Straßenfertiger 3 analog auf eine entsprechende Abstandsregelung zwischen einem LKW 1 und einem hinter diesem herfahrenden Beschicker 43 übertragbar.

## Patentansprüche

1. Verfahren zur Materialübergabe zwischen einem LKW (1) und einem fahrenden Stra-ßenbaufahrzeug,
wobei es sich bei dem Straßenbaufahrzeug um einen Straßenfertiger (3) oder um einen Beschicker (43) für einen Straßenfertiger handelt,
wobei mittels eines Systems zur Abstandsregelung ein Abstand zwischen dem fahrenden Straßenbaufahrzeug und einem ohne Kontakt mit dem Straßenbaufahrzeug vor dem Stra-ßenbaufahrzeug herfahrenden LKW (1) konstant gehalten wird,
wobei während der Abstand zwischen dem fahrenden Straßenbaufahrzeug und dem LKW (1) konstant gehalten wird, Material von einer Lademulde (17) des LKWs (1) in einen Gutbunker (9, 41) des Straßenbaufahrzeugs gekippt wird.

2. Verfahren nach Anspruch 1, wobei der LKW (1) während der Materialübergabe durch seinen eigenen Fahrantrieb (19) angetrieben wird.

3. Verfahren nach einem der vorangehenden Ansprüche, wobei das System zur Abstandsregelung eine Sensoreinrichtung umfasst, welche den Abstand zwischen dem fahrenden Straßenbaufahrzeug und dem vor dem Straßenbaufahrzeug herfahrenden LKW (1) bestimmt.

4. Verfahren nach Anspruch 3, wobei die Sensoreinrichtung einen Abstandssensor (15) umfasst, welcher an dem Straßenbaufahrzeug vorgesehen ist.

5. Verfahren nach Anspruch 3, wobei die Sensoreinrichtung einen Abstandsensor (15) umfasst, welcher an dem LKW (1) vorgesehen ist.

6. Verfahren nach einem der vorangehenden Ansprüche, wobei das System zur Abstandsregelung Steueranweisungen für eine Geschwindigkeit des LKWs (1) erzeugt.

7. Verfahren nach einem der vorangehenden Ansprüche, wobei das System zur Abstandsregelung eine Steuereinheit (27, 33) umfasst, welche einen Fahrantrieb (19) und/oder eine Bremse (21) des LKWs (1) automatisch steuert, um den Abstand zwischen dem fahrenden Straßenbaufahrzeug und dem LKW (1) konstant zu halten.

8. Verfahren nach einem der vorangehenden Ansprüche, wobei Informationen für die Abstandsregelung von dem Straßenbaufahrzeug drahtlos an den LKW (1) übertragen werden.

9. Verfahren nach einem der vorangehenden Ansprüche, wobei das Lenken des LKWs (1) von einem Fahrer des LKWs (1) übernommen wird.

10. Verfahren nach einem der vorangehenden Ansprüche, wobei das System zur Abstandsregelung den Abstand zwischen dem fahrenden Straßenbaufahrzeug und dem vor dem Straßenbaufahrzeug herfahrenden LKW (1) auf einen Wert regelt, welcher basierend auf einer Art des LKWs (1) und/oder des Straßenbaufahrzeugs aus einer Nachschlagetabelle gewählt wird.

11. Verfahren nach einem der vorangehenden Ansprüche, wobei eine Kippfunktion der Lademulde (17) des LKWs (1) von dem Straßenbaufahrzeug aus ferngesteuert wird.

12. Verfahren nach Anspruch 11, wobei die Kippfunktion der Lademulde (17) des LKWs (1) manuell von einem Fahrer des Straßenbaufahrzeugs ferngesteuert wird.

13. Verfahren nach Anspruch 11, wobei an dem Straßenbaufahrzeug ein Füllstandssensor (31) vorgesehen ist, welcher einen Füllstand des Gutbunkers (9, 41) bestimmt, und wobei die Kippfunktion der Lademulde (17) des LKWs (1) basierend auf einer Ausgabe des Füllstandssensors (31) automatisch ferngesteuert wird.

## Claims

1. Method for transferring material between a truck (1) and a driving road construction vehicle,
wherein the road construction vehicle is a road finishing machine (3) or a feeder (43) for a road finishing machine,
wherein a distance between the driving road construction vehicle and a truck (1) driving in front of the road construction vehicle without contact with the road construction vehicle is kept constant with a distance control system,
wherein material is dumped from a loading cavity (17) of the truck (1) into a material hopper (9, 41) of the road construction vehicle while the distance between the driving road construction vehicle and the truck (1) is kept constant.

2. Method according to claim 1, wherein the truck (1) is driven by its own travel drive (19) during the material transfer.

3. Method according to any one of the preceding claims, wherein the distance control system comprises a sensor device which determines the distance between the driving road construction vehicle and the truck (1) driving in front of the road construction vehicle.

4. Method according to claim 3, wherein the sensor device comprises a distance sensor (15) which is provided at the road construction vehicle.

5. Method according to claim 3, wherein the sensor device comprises a distance sensor (15) which is provided at the truck (1).

6. Method according to any one of the preceding claims, wherein the distance control system generates control instructions for a speed of the truck (1).

7. Method according to any one of the preceding claims, wherein the distance control system comprises a control unit (27, 33) which automatically controls a travel drive (19) and/or a brake (21) of the truck (1) to keep the distance between the driving road construction vehicle and the truck (1) constant.

8. Method according to any one of the preceding claims, wherein information for the distance control are wirelessly transmitted from the road construction vehicle to the truck (1).

9. Method according to any one of the preceding claims, wherein steering of the truck (1) is performed by a driver of the truck (1).

10. Method according to any one of the preceding claims, wherein the distance control system controls the distance between the driving road construction vehicle and the truck (1) driving in front of the road construction vehicle to a value which is selected from a lookup table based on a type of the truck (1) and/or a type of the road construction vehicle.

11. Method according to any one of the preceding claims, wherein a tilting function of the loading cavity (17) of the truck (1) is remote-controlled from the road construction vehicle.

12. Method according to claim 11, wherein the tilting function of the loading cavity (17) of the truck (1) is manually remote-controlled by a driver of the road construction vehicle.

13. Method according to claim 11, wherein a filling level sensor (31) is provided at the road construction vehicle which determines a filling level of the material hopper (9, 41), and wherein the tilting function of the loading cavity (17) of the truck (1) is automatically remote-controlled based on an output of the filling level sensor (31).

## Revendications

1. Procédé de transfert de matériau entre un camion (1) et un véhicule de construction routière en mouvement,
dans lequel le véhicule de construction routière est un finisseur routier (3) ou un alimenteur (43) pour un finisseur routier,
dans lequel une distance entre le véhicule de construction routière en mouvement et un camion (1) se déplaçant devant le véhicule de construction routière sans contact avec le véhicule de construction routière est maintenue constante au moyen d'un système de régulation de distance,
dans lequel le matériau est basculé depuis une benne de chargement (17) du camion (1) jusque dans une trémie (9, 41) du véhicule de construction routière tandis que la distance entre le véhicule de construction routière en mouvement et le camion (1) est maintenue constante.

2. Procédé selon la revendication 1, dans lequel le camion (1) est entraîné par son propre entraînement de translation (19) pendant le transfert de matériau.

3. Procédé selon l'une quelconque des revendications précédentes, dans lequel le système de régulation de distance comprend un dispositif de capteur qui détermine la distance entre le véhicule de construction routière en mouvement et le camion (1) se déplaçant devant le véhicule de construction routière.

4. Procédé selon la revendication 3, dans lequel le dispositif de détection comprend un capteur de distance (15) fourni au niveau du véhicule de construction routière.

5. Procédé selon la revendication 3, dans lequel le dispositif de détection comprend un capteur de distance (15) fourni au niveau du camion (1).

6. Procédé selon l'une quelconque des revendications précédentes, dans lequel le système de régulation de distance génère des instructions de commande pour une vitesse du camion (1).

7. Procédé selon l'une quelconque des revendications précédentes, dans lequel le système de régulation de distance comprend une unité de commande (27, 33) qui commande de manière automatique un entraînement de translation (19) et/ou un frein (21) du camion (1) afin de maintenir constante la distance entre le véhicule de construction routière en mouvement et le camion (1).

8. Procédé selon l'une quelconque des revendications précédentes, dans lequel des informations destinées à la régulation de distance sont transmises sans fil depuis le véhicule de construction routière vers le camion (1).

9. Procédé selon l'une quelconque des revendications précédentes, dans lequel la conduite du camion (1) est prise en charge par un conducteur du camion (1).

10. Procédé selon l'une quelconque des revendications précédentes, dans lequel le système de régulation de distance régule la distance entre le véhicule de construction routière en mouvement et le camion (1) se déplaçant devant le véhicule de construction routière à concurrence d'une valeur sélectionnée à partir d'un tableau de référence en se basant sur un type de camion (1) et/ou de véhicule de construction routière.

11. Procédé selon l'une quelconque des revendications précédentes, dans lequel une fonction de basculement de la benne de chargement (17) du camion (1) est commandée à distance par le véhicule de construction routière.

12. Procédé selon la revendication 11, dans lequel la fonction de basculement de la benne de chargement (17) du camion (1) est commandée à distance manuellement par un conducteur du véhicule de construction routière.

13. Procédé selon la revendication 11, dans lequel un capteur de niveau de remplissage (31) qui détermine un niveau de remplissage de la trémie (9, 41) est fourni au niveau du véhicule de construction routière, et dans lequel la fonction de basculement de la benne de chargement (17) du camion (1) est commandée à distance de manière automatique en se basant sur une donnée de sortie du capteur de niveau de remplissage (31).
